(19) **Europäisches Patentamt**
**European Patent Office**
**Office européen des brevets**

(11) **EP 3 482 052 B1**

(12) **FASCICULE DE BREVET EUROPEEN**

(45) Date de publication et mention
de la délivrance du brevet:
**29.07.2020 Bulletin 2020/31**

(21) Numéro de dépôt: **17740430.8**

(22) Date de dépôt: **14.06.2017**

(51) Int Cl.:
*F01N 9/00* [(2006.01)] *F01N 3/023* [(2006.01)]

(86) Numéro de dépôt international:
**PCT/FR2017/051536**

(87) Numéro de publication internationale:
**WO 2018/007702 (11.01.2018 Gazette 2018/02)**

(54) **PROCEDE D'ADAPTATION D'UNE ESTIMATION D'UNE VITESSE DE COMBUSTION DES SUIES D'UN FILTRE A PARTICULES DE MOTEUR THERMIQUE**

VERFAHREN ZUR ANPASSUNG DER BESTIMMUNG DER RUSSVERBRENNUNGSRATE IN EINEM FILTER EINES VERBRENNUNGSMOTORS

METHOD FOR ADAPTING THE ESTIMATION OF THE SOOT COMBUSTION RATE IN A FILTER OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.07.2016 FR 1656544**

(43) Date de publication de la demande:
**15.05.2019 Bulletin 2019/20**

(73) Titulaire: **PSA Automobiles S.A.**
**78300 Poissy (FR)**

(72) Inventeur: **LAIGLE, Emmanuel**
**92400 COURBEVOIE (FR)**

(56) Documents cités:
**EP-A1- 2 213 853      EP-A1- 2 423 477**
**WO-A1-2010/007282**

Printed by Jouve, 75001 PARIS (FR)

**Description**

La présente invention porte sur un procédé d'adaptation d'une estimation d'une vitesse de combustion des suies d'un filtre à particules de moteur thermique. L'invention trouve une application particulièrement avantageuse, mais non exclusive, avec tous les véhicules équipés d'un filtre à particules, en particulier les véhicules de type diesel.

Les gaz d'échappement des moteurs thermiques comportent habituellement des éléments polluants et notamment des particules qui sont rejetées dans l'atmosphère. Afin de supprimer ces rejets, des filtres sont placés dans la ligne d'échappement des gaz pour bloquer les particules. Ces filtres à particules (FAP) sont généralement des cylindres en céramique composés d'une multitude de canaux de faibles diamètres (de l'ordre de la dizaine de microns). Les particules sont piégées dans ces canaux sous forme de suies ce qui a pour effet d'encrasser progressivement le filtre. Il est donc nécessaire de régénérer le filtre périodiquement.

A cette fin, le filtre est chauffé afin de brûler les particules piégées. Une technique de régénération consiste à chauffer le filtre à l'aide des gaz d'échappement en élevant la température de ces gaz. Classiquement, le surplus d'énergie à l'échappement nécessaire à l'élévation de température par rapport au fonctionnement normal du moteur est fourni par l'utilisation de post-injections, c'est-à-dire d'injections de carburant tardives, après le point mort haut du cycle, ou par une dégradation du rendement de la combustion, ou encore par une injection de carburant directement dans la ligne d'échappement.

On connait des documents EP2213853A1, WO2010/007282A1 et EP2423477A1 des procédé d'estimation d'une vitesse de combustion des suies suivant un modèle standard.

Il a été observé expérimentalement que lors de certaines situations de vie, la vitesse de combustion réelle des suies dans le filtre à particules est plus importante que celle modélisée par le contrôle moteur. La régénération est donc prolongée alors que le filtre à particules est déjà vide. Cela a pour effet de diminuer l'efficacité de lubrification du moteur par introduction excessive de carburant dans l'huile moteur et d'augmenter la consommation de carburant pendant la phase de régénération du filtre à particules.

En particulier, il a été constaté que l'augmentation de vitesse de combustion des suies se produit lorsque la proportion d'oxygène dans les gaz d'échappement est stable. L'invention propose donc de modifier l'estimateur embarqué de vitesse de combustion des suies pour prendre en compte cette sur-combustion des suies lors des phases de stabilité d'oxygène.

Plus précisément, l'invention a pour objet un procédé de régénération comprenant une adaptation d'une estimation d'une vitesse de combustion des suies d'un filtre à particules dans une ligne d'échappement de moteur thermique, notamment de véhicule automobile, caractérisé en ce que, lors d'une phase de régénération du filtre à particules, le procédé comporte:

- une étape d'estimation d'une vitesse de combustion des suies suivant un modèle d'estimation standard dit modèle d'Arrhenius,
- une étape de détection d'une stabilisation d'une concentration en oxygène dans des gaz d'échappement, et
- une étape de modification de la vitesse de combustion des suies par pondération par un gain de la vitesse de combustion des suies du modèle d'estimation standard suite à la détection de la stabilisation de la concentration en oxygène,
--une étape de détermination du temps de régénération du filtre à particules au juste nécessaire à partir de la vitesse de combustion des suies modifiée.

L'invention permet ainsi une estimation optimale de la sur-combustion des suies dans le filtre à particules. Il est ainsi possible de définir un temps de régénération au juste nécessaire pour limiter la surconsommation en carburant et la dilution d'huile moteur. En outre, l'invention permet une estimation précise de la température du filtre à particules lors des régénérations sévères pour évaluer correctement son niveau de dégradation potentielle.

Selon une mise en œuvre, la stabilisation de la concentration en oxygène dans les gaz d'échappement est détectée via une moyenne glissante d'une dérivée de la concentration en oxygène.

Selon une mise en œuvre, la concentration en oxygène est estimée en amont du filtre à particules.

Selon une mise en œuvre, la concentration en oxygène en amont du filtre à particules est basée sur une estimation d'un calculateur moteur.

Selon une mise en œuvre, la concentration en oxygène en amont du filtre à particules est obtenue par l'utilisation d'un capteur positionné dans la ligne d'échappement.

Selon une mise en œuvre, lorsque la concentration en oxygène se stabilise, le modèle modifié de calcul de la vitesse de combustion des suies dans le filtre à particules est le suivant:

$$v_{suies/O_2\_N} = gain_{stab\,O_2}.k_0\,e^{-\frac{E_a}{RT}}\frac{m_{suies}}{M_C}P_{O_2}^{\gamma}$$

Avec:

- $v_{suies/O_2\_N}$ étant la vitesse de combustion des suies par l'oxygène tenant compte de la sur-combustion des suies lors de phases de stabilisation d'oxygène;
- $k_0$ étant une constante cinétique de la réaction de combustion;
- $E_a$ étant une énergie d'activation de la réaction;
- $R$ étant une constante des gaz parfaits;
- $T$ étant une température dans le filtre à particules;
- $m_{suies}$ étant une masse de suies dans le filtre à particules et $M_C$ une masse molaire de carbone;
- $P_{O_2}^{\gamma}$ étant une pression partielle en oxygène, fonction d'une pression dans le filtre à particules et d'une concentration en oxygène en amont du filtre à particules;
- $gain_{stab\,O_2}$ étant un gain sur la cinétique de combustion des suies.

L'invention a également pour objet un calculateur moteur comportant une mémoire stockant des instructions logicielles pour la mise en oeuvre du procédé tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

La figure 1 montre un diagramme des étapes du procédé selon l'invention d'adaptation d'une estimation d'une vitesse de combustion des suies d'un filtre à particules;

La figure 2 est un diagramme d'un filtre selon l'invention permettant de détecter une stabilisation d'oxygène;

La figure 3 est un diagramme illustrant l'intégration du gain issu du diagramme de la figure 2 dans le calcul de la vitesse de combustion des suies selon l'invention;

La figure 4 est une représentation graphique d'un exemple de réponse du filtre de détection de la stabilisation d'oxygène.

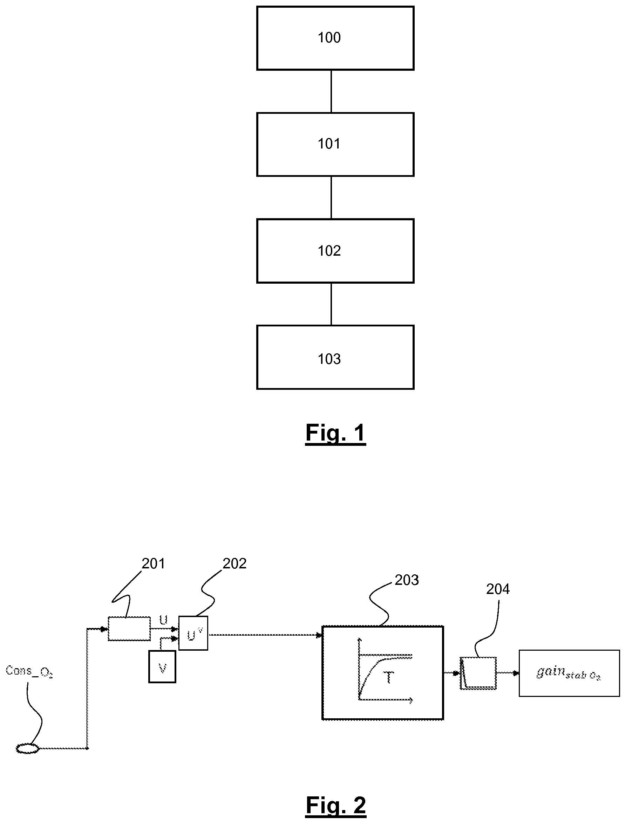

La figure 1 montre un diagramme des étapes du procédé d'adaptation d'une estimation d'une vitesse de combustion des suies $v_{suies/O_2\_N}$ d'un filtre à particules dans une ligne d'échappement de moteur thermique, notamment de véhicule automobile.

Lors d'une étape 100 de régénération du filtre à particules, le calculateur moteur estime, dans une étape 101, la vitesse de combustion des suies $v_{suies/O_2}$ suivant un modèle d'estimation standard dit modèle d'Arrhenius.

Suite à la détection au moyen d'un filtre de la stabilisation de la concentration en oxygène Cons_$O_2$ dans les gaz d'échappement dans une étape 102, on modifie le modèle d'estimation standard, dans une étape 103, par pondération de la vitesse de combustion des suies $v_{suies/O_2}$ par un gain $gain_{stab\,O_2}$. Autrement dit, le modèle d'estimation d'Arrhenius est pondéré par le gain $gain_{stab\,O_2}$ pour obtenir le modèle modifié de calcul de la vitesse de combustion des suies suivant:

$$v_{suies/O_2\_N} = gain_{stab\,O_2}.v_{suies/O_2} = gain_{stab\,O_2}.k_0\,e^{-\frac{E_a}{RT}}\frac{m_{suies}}{M_C}P_{O_2}^{\gamma}$$

Avec:

- $v_{suies/O_2\_N}$ étant la vitesse de combustion des suies par l'oxygène tenant compte de la sur-combustion des suies lors de phases de stabilisation d'oxygène;
- $v_{suies/O_2}$ étant une vitesse de combustion des suies par l'oxygène calculée suivant le modèle standard d'Arrhenius;
- $k_0$ étant une constante cinétique de la réaction de combustion;
- $E_a$ étant une énergie d'activation de la réaction;
- $R$ étant une constante des gaz parfaits;
- $T$ étant une température dans le filtre à particules;
- $m_{suies}$ étant une masse de suies dans le filtre à particules et $M_C$ une masse molaire de carbone;
- $P_{O_2}^{\gamma}$ étant une pression partielle en oxygène, fonction d'une pression dans le filtre à particules et d'une concentration en oxygène en amont du filtre à particules;
- $gain_{stab\,O_2}$ étant un gain sur la cinétique de combustion des suies.

La figure 2 montre un exemple de réalisation d'un filtre permettant de détecter une stabilisation d'oxygène. Ce filtre reçoit en entrée la concentration d'oxygène Cons_$O_2$ en amont du filtre à particules. Cette concentration en oxygène Cons_$O_2$ est estimée par le calculateur moteur à partir de la quantité de carburant injecté et de la quantité d'oxygène entrant dans le moteur. En variante, la concentration d'oxygène Cons_$O_2$ en amont du filtre à particules pourrait toutefois être mesurée au moyen d'un capteur dédié.

Le bloc 201 calcule une dérivée de la concentration en oxygène Cons_$O_2$. Le bloc 201 est par exemple un dérivateur à pas de temps discret. Cela permet de détecter une pente faible dans l'évolution de la concentration d'oxygène correspondant à une phase de stabilisation de cette concentration.

Le bloc 202 met à la puissance V la valeur de sortie U du dérivateur 201, de telle façon que les valeurs faibles de dérivées tendent vers 0. Autrement dit, le bloc 202 permet d'amplifier les faibles valeurs de dérivées.

Afin de lisser les variations de concentration en oxygène, un filtre passe-bas 203 est appliqué en sortie du bloc 202. Il est à noter que le filtre passe-bas 203 pourra être configuré notamment avec une période d'échantillonnage et une valeur initiale non nulle pour éviter l'application d'un gain élevé au début de sa mise en œuvre. Une valeur booléenne permet également sa réinitialisation.

Une cartographie 204 permet de fournir le gain $gain_{stab\,O_2}$ à partir de la sortie du filtre passe-bas 203. Plus la valeur en sortie du filtre 203 est basse, plus le gain $gain_{stab\,O_2}$ à appliquer à la vitesse de combustion des suies est élevé, car cela correspond à une phase de fonctionnement dans laquelle la concentration en oxygène est stable. Plus la valeur en sortie du filtre 203 est élevée, plus le gain $gain_{stab\,O_2}$ à appliquer à la vitesse de combustion des suies est faible car cela correspond à une phase de fonctionnement dans laquelle la concentration en oxygène n'est pas stabilisée.

La stabilisation de la concentration en oxygène Cons_$O_2$ dans les gaz d'échappement pourra ainsi être détectée via une moyenne glissante de la dérivée de la concentration en oxygène Cons_$O_2$.

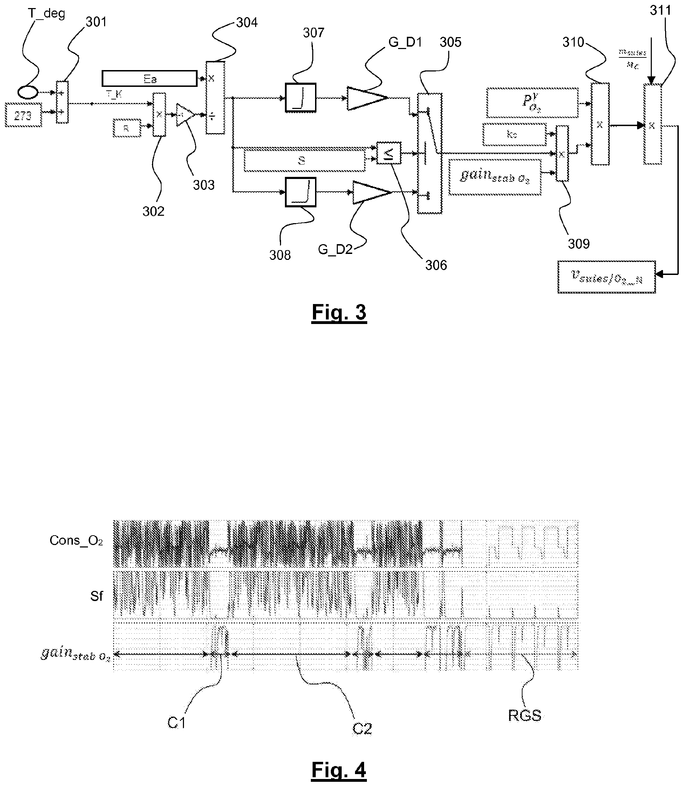

La figure 3 est un diagramme illustrant l'intégration du gain $gain_{stab\,O_2}$ issu du diagramme de la figure 2 dans le calcul de la vitesse de combustion des suies $v_{suies/O_2\_N}$.

Plus précisément, une température interne T_deg du filtre à particules est estimée par le calculateur moteur. Un bloc 301 permet de transformer la température T_deg en degrés Celsius fournie par le calculateur moteur en une température T_K en Kelvin par ajout de la valeur 273 à la température T_deg.

Le bloc 302 multiplie la sortie de température T_K du bloc 301 par la constante des gaz parfait R. L'ensemble est multiplié par -1 via le bloc 303.

Le bloc 304 permet de calculer le rapport entre l'énergie d'activation Ea prédéterminée et le produit -RT issu du bloc 303.

Le commutateur 305 permet de sélectionner une valeur exponentielle calculée en fonction de la comparaison entre la valeur -Ea/RT issue du bloc 304 et une valeur seuil S réalisée par le bloc 306. En effet, dans le cas où la valeur -Ea/RT est supérieure à la valeur seuil S, le commutateur 305 sélectionne la valeur en sortie de la première cartographie 307 et du premier gain G_D1. Tandis que dans le cas où la valeur -Ea/RT est inférieure à la valeur seuil S, le commutateur 305 sélectionne la valeur en sortie de la deuxième cartographie 308 et du deuxième gain G_D2.

Un bloc 309 multiplie la valeur exponentielle ainsi calculée par la constante cinétique de la réaction de combustion $k_0$. Il est à noter que le gain $gain_{stab\,O_2}$ issu de la cartographie précédente est appliqué via le bloc 309. On obtient ainsi en sortie du bloc 309 le produit $gain_{stab\,O_2} . k_0\, e^{-\frac{E_a}{RT}} . gain_{stab}$ En variante, le gain $gain_{stab\,O_2}$ pourra être appliqué via un autre bloc multiplicatif, comme par exemple le bloc 310 ou 311 décrits ci-après.

La sortie du bloc 309 est multipliée par la pression partielle en oxygène $P_{O_2}^{\gamma}$ pour obtenir le produit $gain_{stab\,O_2} . k_0\, e^{-\frac{E_a}{RT}} . P_{O_2}^{\gamma}\, gain_{stab}$ via le bloc 310.

La sortie du bloc 310 est multipliée par le rapport $\frac{m_{suies}}{M_C}$ via le bloc 311 pour obtenir le produit $gain_{stab\,O_2} . k_0\, e^{-\frac{E_a}{RT}} \frac{m_{suies}}{M_C} P_{O_2}^{\gamma}$ correspondant au calcul souhaité pour estimer au plus près la vitesse de combustion des suies $v_{suies/O_2\_N}$ du filtre à particules dans des phases de concentration en oxygène stabilisée.

Les différents blocs pourront être implémentés de manière fonctionnelle dans le calculateur moteur du véhicule automobile qui comportera une mémoire stockant des instructions logicielles pour la mise en œuvre du procédé selon l'invention.

La figure 4 est une représentation graphique d'un exemple de réponse du filtre de détection de la stabilisation d'oxygène.

On remarque que sur des cycles C1 où la concentration en oxygène Cons_$O_2$ se stabilise, la sortie du filtre Sf tend vers 0 et le gain $gain_{stab\,O_2}$ sur la cinétique de combustion des suies devient supérieur à 1. Cela est observable sur les cycles C1 typés autoroute et lors des régénérations sévères RGS du filtre à particules. Par ailleurs, sur les cycles C2, la réponse de la sortie du filtre Sf est différente de 0 et le gain $gain_{stab\ O_2}$ sur la cinétique de combustion des suies vaut 1.

## Revendications

1. Procédé de régénération comprenant une adaptation d'une estimation d'une vitesse de combustion des suies ($v_{suies/O_2\_N}$) d'un filtre à particules dans une ligne d'échappement de moteur thermique, notamment de véhicule automobile, **caractérisé en ce que**, lors d'une phase de régénération du filtre à particules, ledit procédé comporte:

   - une étape (101) d'estimation d'une vitesse de combustion des suies ($v_{suies/O_2}$) suivant un modèle d'estimation standard dit modèle d'Arrhenius,
   - une étape (102) de détection d'une stabilisation d'une concentration en oxygène (Cons_$O_2$) dans des gaz d'échappement, et
   - une étape (103) de modification de la vitesse de combustion des suies ($v_{suies/O_2\_N}$) par pondération par un gain ($gain_{stab\ O_2}$) de la vitesse de combustion des suies ($v_{suies/O_2}$) du modèle d'estimation standard suite à la détection de la stabilisation de la concentration en oxygène (Cons_$O_2$),
   - une étape de détermination du temps de régénération du filtre à particules au juste nécessaire à partir de la vitesse de combustion des suies modifiée.

2. Procédé selon la revendication 1, **caractérisé en ce que** la stabilisation de la concentration en oxygène (Cons_$O_2$) dans les gaz d'échappement est détectée via une moyenne glissante d'une dérivée de la concentration en oxygène (Cons_$O_2$).

3. Procédé selon la revendication 2, **caractérisé en ce que** la concentration en oxygène (Cons_$O_2$) est estimée en amont du filtre à particules.

4. Procédé selon la revendication 3, **caractérisé en ce que** la concentration en oxygène (Cons_$O_2$) en amont du filtre à particules est basée sur une estimation d'un calculateur moteur.

5. Procédé selon la revendication 3, **caractérisé en ce que** la concentration en oxygène (Cons_$O_2$) en amont du filtre à particules est obtenue par l'utilisation d'un capteur positionné dans la ligne d'échappement.

6. Procédé selon l'une quelconque des revendications 1 à 5, **caractérisé en ce que**, lorsque la concentration en oxygène (Cons_$O_2$) se stabilise, le modèle modifié de calcul de la vitesse de combustion des suies dans le filtre à particules est le suivant:

$$v_{suies/O_2\_N} = gain_{stab\ O_2}.\,k_0\,e^{-\frac{E_a}{RT}}\frac{m_{suies}}{M_C}P_{O_2}^{\gamma}$$

Avec:

   - $v_{suies/O_2\_N}$ étant la vitesse de combustion des suies par l'oxygène tenant compte de la sur-combustion des suies lors de phases de stabilisation d'oxygène;
   - $k_0$ étant une constante cinétique de la réaction de combustion;
   - $E_a$ étant une énergie d'activation de la réaction;
   - $R$ étant une constante des gaz parfaits;
   - $T$ étant une température dans le filtre à particules;
   - $m_{suies}$ étant une masse de suies dans le filtre à particules et $M_C$ une masse molaire de carbone;
   - $P_{O_2}^{\gamma}$ étant une pression partielle en oxygène, fonction d'une pression dans le filtre à particules et d'une concentration en oxygène en amont du filtre à particules;
   - $gain_{stab\ O_2}$ étant un gain sur la cinétique de combustion des suies.

7. Calculateur moteur comportant une mémoire stockant des instructions logicielles pour la mise en œuvre du procédé tel que défini selon l'une quelconque des revendications précédentes.

**Patentansprüche**

1. Regenerationsverfahren, umfassend eine Anpassung einer Schätzung einer Rußverbrennungsgeschwindigkeit ($v_{suies/O_2\_N}$) eines Partikelfilters in einer Abgasleitung einer Wärmekraftmaschine, insbesondere eines Kraftfahrzeugs, die **dadurch gekennzeichnet ist dass** während einer Regenerationsphase des Partikelfilters das Verfahren umfasst:

   - einen Schritt (101) zum Schätzen einer Verbrennungsrate des Rußes ($v_{suies/O_2}$) gemäß einem Standardschätzungsmodell, das als Arrhenius-Modell bezeichnet wird,
   - einen Schritt (102) zum Nachweis einer Stabilisierung einer Sauerstoffkonzentration (Cons_$O_2$) in den Abgasen und
   - einen Schritt (103) zum Modifizieren der Verbrennungsgeschwindigkeit des Rußes ($v_{suies/O_2\_N}$) durch Gewichtung der Verbrennungsgeschwindigkeit des Rußes (($v_{suies/O_2}$) mit einer Verstärkung ($gain_{stab\,O_2}$) das Standardschätzungsmodell nach dem Nachweis der Stabilisierung der Sauerstoffkonzentration (Cons_$O_2$),
   - ein Schritt zur Bestimmung der Regenerationszeit des Partikelfilters auf die gerade notwendige aus der modifizierten Rußverbrennungsgeschwindigkeit.

2. Verfahren nach Anspruch 1, **dadurch gekennzeichnet, dass** die Stabilisierung der Sauerstoffkonzentration (Cons_$O_2$) in den Abgasen über einen gleitenden Durchschnitt eines Derivats der Sauerstoffkonzentration (Cons_$O_2$) erfasst wird.

3. Verfahren nach Anspruch 2, **dadurch gekennzeichnet, dass** die Sauerstoffkonzentration (Cons_$O_2$) vor dem Partikelfilter geschätzt wird.

4. Verfahren nach Anspruch 3, **dadurch gekennzeichnet, dass** die Sauerstoffkonzentration (Cons_$O_2$) vor dem Partikelfilter auf einer Schätzung eines Motorcomputers basiert.

5. Verfahren nach Anspruch 3, **dadurch gekennzeichnet, dass** die Sauerstoffkonzentration (Cons_$O_2$) vor dem Partikelfilter durch Verwendung eines in der Abgasleitung positionierten Sensors erhalten wird.

6. Verfahren nach einem der Ansprüche 1 bis 5, das **dadurch gekennzeichnet ist, dass** bei Stabilisierung der Sauerstoffkonzentration (Cons_$O_2$) das modifizierte Modell zur Berechnung der Verbrennungsrate des Rußes im Partikelfilter wie folgt ist:

$$v_{suies/O_2\_N} = gain_{stab\,O_2} . k_0 \, e^{-\frac{E_a}{RT}} \frac{m_{suies}}{M_C} P_{O_2}^{\gamma}$$

   Mit:

   - $v_{suies/O_2\_N}$ ist die Verbrennungsrate von Ruß durch Sauerstoff unter Berücksichtigung der Überverbrennung von Ruß während der Sauerstoffstabilisierungsphasen;
   - $k_0$ ist eine kinetische Konstante der Verbrennungsreaktion;
   - $E_a$ ist eine Aktivierungsenergie der Reaktion;
   - $R$ ist eine Konstante der idealen Gase;
   - $T$ ist eine Temperatur im Partikelfilter;
   - $m_{suies}$ ist eine Rußmasse im Partikelfilter und $M_C$ eine Molmasse von Kohlenstoff;
   - $P_{O_2}^{\gamma}$ ist ein Sauerstoffpartialdruck, eine Funktion eines Drucks im Partikelfilter und einer Sauerstoffkonzentration vor dem Partikelfilter;
   - $gain_{stab\,O_2}$ ist ein Gewinn für die Verbrennungskinetik von Ruß.

7. Motorcomputer, der einen Speicher zum Speichern von Softwareanweisungen zum Implementieren des Verfahrens umfasst, wie in einem der vorhergehenden Ansprüche definiert.

**Claims**

1. Regeneration method comprising an adaptation of an estimation of a soot combustion speed ($v_{suies/O_2\_N}$) of a particulate filter in an exhaust line of a heat engine, in particular of a motor vehicle, **characterized in that**, during a regeneration phase of the particulate filter, said method comprises :

   - a step (101) of estimating a combustion rate of the soot ($v_{suies/O_2}$) according to a standard estimation model called the Arrhenius model,
   - a step (102) of detecting a stabilization of an oxygen concentration (Cons_$O_2$) in the exhaust gases, and
   - a step (103) of modifying the combustion speed of the soot ($v_{suies/O_2\_N}$) by weighting by a gain ($gain_{stab\ O_2}$) of the combustion speed of the soot ($v_{suies/O_2}$) the standard estimation model following the detection of the stabilization of the oxygen concentration (Cons_$O_2$),
   - a step of determining the regeneration time of the particulate filter to the just necessary from the modified soot combustion speed.

2. Method according to claim 1, **characterized in that** the stabilization of the oxygen concentration (Cons_$O_2$) in the exhaust gases is detected via a sliding average of a derivative of the oxygen concentration (Cons_$O_2$).

3. Method according to claim 2, **characterized in that** the oxygen concentration (Cons_O2) is estimated upstream of the particle filter.

4. Method according to claim 3, **characterized in that** the oxygen concentration (Cons_$O_2$) upstream of the particulate filter is based on an estimate from an engine computer.

5. Method according to claim 3, **characterized in that** the oxygen concentration (Cons_$O_2$) upstream of the particle filter is obtained by the use of a sensor positioned in the exhaust line.

6. Method according to any one of claims 1 to 5, **characterized in that**, when the oxygen concentration (Cons_O2) stabilizes, the modified model for calculating the combustion rate of the soot in the particulate filter is as follows:

$$v_{suies/O_2\_N} = gain_{stab\ O_2}.\,k_0\,e^{-\frac{E_a}{RT}}\frac{m_{suies}}{M_C}P_{O_2}^{\gamma}$$

   With:

   - $v_{suies/O_2\_N}$ being the combustion rate of soot by oxygen taking into account the over-combustion of soot during oxygen stabilization phases;
   - $k_0$ being a kinetic constant of the combustion reaction;
   - $E_a$ being an activation energy of the reaction;
   - $R$ being a constant of the ideal gases;
   - $T$ being a temperature in the particle filter;
   - $m_{suies}$ being a mass of soot in the particle filter and $M_C$ a molar mass of carbon;
   - $P_{O_2}^{\gamma}$ being a partial oxygen pressure, a function of a pressure in the particulate filter and of an oxygen concentration upstream of the particulate filter;
   - $gain_{stab\ O_2}$ being a gain on the combustion kinetics of soot.

7. Engine computer comprising a memory storing software instructions for implementing the method as defined in any one of the preceding claims.

**Fig. 1**

**Fig. 2**

**Fig. 3**

**Fig. 4**

**EP 3 482 052 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2213853 A1
- WO 2010007282 A1
- EP 2423477 A1